# EUROPEAN PATENT APPLICATION

(11) **EP 2 760 190 A1**
(43) Date of publication of application: **30.07.2014**
(21) Application number: 14152220.1
(22) Date of filing: 23.01.2014
(51) Int. Cl.: H04M 3/436, H04M 1/725

(54) **Method and electronic device for providing call rejection function**

(30) Priority: 23.01.2013 KR 20130007642
(71) Applicant: Samsung Electronics Co., Ltd, Gyeonggi-do 443-742 (KR)
(72) Inventor: Cho, Jaewan, 443-742 Gyeonggi-do (KR)
(74) Representative: Nederlandsch Octrooibureau

(57) **Abstract**

A method and an electronic device, e.g. a mobile phone 100, for providing a call rejection function are provided. The method includes the device receiving an event for setting the call rejection function (301) and outputs one or more setting condition items for setting the call rejection function (figure 4) in response to reception of the event. Then the device receives an input event for selecting one of the setting condition items (307) and performs the call rejection function (309) based on a setting condition of the selected setting condition item in response to reception of the input event. The call reject function can also provide a message to the caller to inform them of the reasons as to why the call is being rejected. This message can be generated automatically based on scheduling information contained in a calendar, customised by the called party or selected out of a list of predetermined answers.

## Description

### TECHNICAL FIELD

The present disclosure relates to a call rejection function of an electronic device. More particularly, the present disclosure relates to a method and electronic device for providing a call rejection function.

### BACKGROUND

Nowadays a great variety of electronic devices having a communication function are increasingly popularized due to their high usability and good portability. With a touch screen much more enlarged and owing to a support by hardware and software that have ability to offer various contents, such electronic devices are now showing a dramatic growth.

Meanwhile, a call function provided by electronic devices is one of essential functions to users. For users who make or receive a call, various techniques for a more convenient call function have been proposed and developed. In a certain situation, a call function of electronic devices may often create disturbance to a user's duties or reduce the user's concentration level. In order to mitigatesuch problems, the user can turn off a communication module that supports a call function. This is, however, an undesirable solution since any other function, e.g., a search function, based on a communication module becomes unavailable.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure may provide a method and electronic device for promptly setting a call rejection function in response to a user's request.

Another aspect of the present disclosure is to provide a method and electronic device for checking schedule information during a call rejection time and then automatically creating a call rejection message.

In accordance with an aspect of the present disclosure, a method for providing a call rejection function is provided. The method includes receiving an event for setting the call rejection function, outputting one or more setting condition items for setting the call rejection function in response to reception of the event, receiving an input event for selecting one of the setting condition items, and performing the call rejection function based on a setting condition of the selected setting condition item in response to reception of the input event.

In accordance with another aspect of the present disclosure, an electronic device for providing a call rejection function is provided. The electronic device includes a display unit configured to output one or more setting condition items for setting the call rejection function when an event for setting the call rejection function is received, and a control unit configured to perform the call rejection function based on a setting condition of the selected setting condition item when an input event for selecting one of the setting condition items is received.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating an electronic device according to an embodiment of the present disclosure.
FIG. 2 is a block diagram illustrating a control unit of the electronic device shown in FIG. 1 according to an embodiment of the present disclosure.
FIG. 3 is a flow diagram illustrating a method for providing a call rejection function according to an embodiment of the present disclosure.
FIG. 4 shows a screenshot illustrating a screen interface for setting a call rejection function according to an embodiment of the present disclosure.
FIG. 5 shows a screenshot illustrating a screen after a call rejection function is set according to an embodiment of the present disclosure.
FIG. 6 is a flow diagram illustrating a method for providing a call rejection message according to an embodiment of the present disclosure.
FIG. 7 shows a screenshot illustrating examples of a call rejection message according to an embodiment of the present disclosure.
FIG. 8 shows a screenshot illustrating an example of a call rejection message based on schedule information according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a message" includes reference to one or more of such messages.

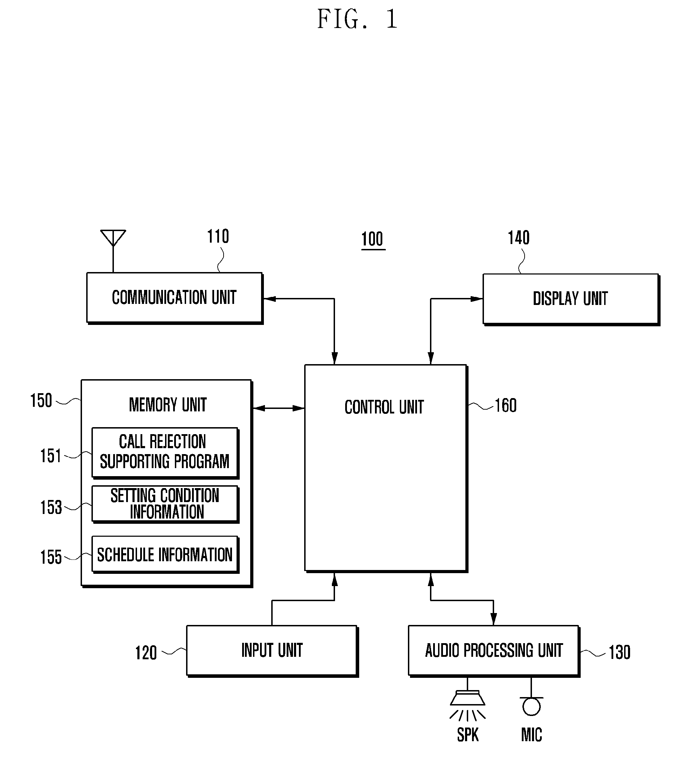

FIG. 1 is a block diagram illustrating an electronic device according to an embodiment of the present disclosure.

Referring to FIG. 1, a device 100 may include a communication unit 110, an input unit 120, an audio processing unit 130, a display unit 140, a memory unit 150, and a control unit 160. The device 100 may include any other similar and/or suitable units. The display unit 140 may have a touch-sensitive surface and thus may perform an input function together with the input unit 120. The device 100 may further include any other similar and/or suitable unit such as a Global Positioning System (GPS) unit for collecting location information.

When any incoming call arrives from a caller device, the device 100 may check whether a current status is a call rejection status. If so, the device 100 may provide a call rejection message to a caller device. If a current status is not a call rejection status, the device 100 may offer a menu for promptly setting a call rejection function and, in response to a selection of such a menu, activate a call rejection function. Therefore, the device 100 can perform a call rejection function for a given time from a time point a user desires.

Meanwhile, if a current status is a call rejection status, the device 100 may check schedule information stored in the memory unit 150, parse the content of schedule information, automatically create a call rejection message, and then offer the message to a caller device. At this time, the device 100 may collect information associated with a caller device from an incoming call and then, based on the collected information, offer a call rejection message to a caller device.

The communication unit 110 may establish a communication channel based on access to a selected network. Particularly, the communication unit 110 may perform access to a network of a service operator and receive an incoming call from a caller device through the network. Then the communication unit 110 may transfer the received incoming call to the control unit 160. Moreover, the communication unit 110 may provide a call rejection message based on schedule information to a caller device under the control of the control unit 160 while the incoming call is received. Specifically, the communication unit 110 may create at least one of a message service channel and a data communication channel, and transmit a call rejection message through at least one of both channels under the control of the control unit 160. In a case of performing such a call rejection function, the communication unit 110 may support the management of a call rejection log. At this time, the control unit 160 may output a call rejection log and also offer information about what kind of call rejection message is transmitted.

The input unit 120 may create various input signals used for the operation of the device 100. Depending on compatibility of the device 100, the input unit 120 may employ any of various input mechanisms such as a keyboard, a keypad, key buttons, and any other similar and/or suitable input units. Additionally or alternatively, the input unit 120 may be realized in the form of a virtual touch map or virtual keypad which is displayed on a touch screen composed of a touch panel and a display panel. Also, the input unit 120 may be formed of a touch pen and a pen touch panel. Moreover, the input unit 120 may have a special key button or virtual keypad which is designed to create schedule information used for creating a call rejection message or to create a default call rejection message. Particularly, the input unit 120 may create an input signal for setting a call rejection function in response to a user's request. For example, the input unit 120 may create an input signal for selecting one of predefined call rejection setting items including at least one of time, distance, and location.

The audio processing unit 130 may output audio data defined during the operation of the device 100, audio data associated with playback of audio files stored in the memory unit 150, audio data received from any external entities, and any other similar and/or suitable audio data. Also, the audio processing unit 130 may support a function to collect audio data. For the above, the audio processing unit 130 may include a Speaker (SPK) and a Microphone (MIC). Particularly, the audio processing unit 130 may output various feedback sounds or sound effects in connection with a call rejection function. For example, when an incoming call arrives, the audio processing unit 130 may output a feedback sound, ringtone or sound effect. Also, the audio processing unit 130 may output a feedback sound or sound effect corresponding to a call rejection function or a call rejection message. Such outputs of feedback sounds and sound effects may be inactivated according to a user's setting.

The display unit 140 may display a great variety of screens used for the operation of the device 100. For example, the display unit 140 may offer an idle screen, a menu screen, a memo or email writing screen, a webpage screen, and any other similar and/or suitable screen. The display unit 140 may be formed of a touch screen having a touch panel and a display panel, thus supporting an input function as well as a display function.

Meanwhile, the display unit 140 may display a screen used for setting a call rejection function. Additionally, the display unit 140 may display information about call rejection setting conditions. This information may allow a user to know a current call rejection status, initial setting values, residual values such as remaining time or distance till the inactivation of a call rejection function, or elapse values such as passing time or distance from the initial setting.

Further, the display unit 140 may display a call rejection log that indicates information about incoming calls received during a call rejection time. The display unit 140 may also display information about call rejection messages together with a call rejection log. Such screen interfaces of the display unit 140 will be fully described below with reference to the drawings.

The memory unit 150 may store an operating system and programs used for the operation of the device 100. Further, the memory unit 150 may store data, applications and algorithms in connection with various user functions. Particularly, to set a call rejection function and transmit a call rejection message, the memory unit 150 may store a call rejection supporting program 151, setting condition information 153, and schedule information 155.

The call rejection supporting program 151 may include a setting routine for setting a call rejection function and a message transmission routine for transmitting a call rejection message in response to the arrival of an incoming call. Also, the call rejection supporting program 151 may further include a routine for managing a call rejection log and a routine for managing a call rejection message.

The setting routine may include a routine for outputting call rejection setting items including at least one of a time, distance and location, and a routine for storing the setting condition information 153 corresponding to a selected item in the memory unit 150. Further, the setting routine may include a routine for checking the setting condition information 153 and then performing a call rejection function, and a routine for inactivating a call rejection function when a time or location defined in the setting condition information 153 is satisfied.

The message transmission routine may include a routine for checking whether an incoming call arrives while a call rejection function is performed, a routine for checking whether there is the schedule information 155 when an incoming call arrives, a routine for parsing the content of the schedule information 155, a routine for automatically creating a call rejection message on the basis of parsed information, and a routine for transmitting a call rejection message to a caller device. Further, the message transmission routine may include a routine for automatically selecting a default message and then transmitting the default message to a caller device if there is no related schedule information when an incoming call arrives.

The setting condition information 153 may include a setting condition which corresponds to an item selected in response to an input signal when a menu including call rejection setting items is provided. For example, the setting condition information 153 may include at least one of a time, distance and location. Namely, the setting condition information 153 may indicate a time only or a combination of a time and a location. For this, a call rejection setting menu may offer various items including at least one of a time, distance and location.

The schedule information 155 may be created in connection with a scheduling program. The schedule information 155 may define a time and location and record schedule content. Also, the schedule information 155 may contain a schedule title. In response to setting of a call rejection function, the schedule information 155 reserved in connection with a current status such as time or location may be offered to the control unit 160.

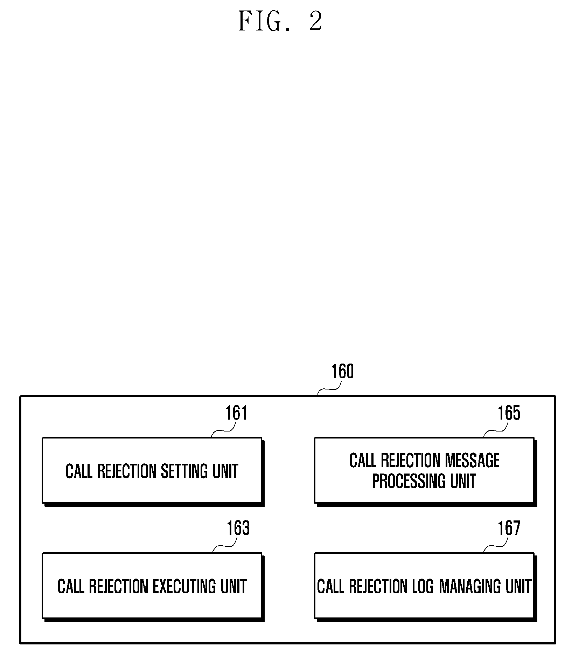

The control unit 160 may control the flow of signals, the collection and processing of data, and the output of information so as to support functions to set a call rejection function and to transmit a call rejection message. For the above, the control unit 160 may include elements shown in FIG. 2.

FIG. 2 is a block diagram illustrating the control unit 160 according to an embodiment of the present disclosure.

Referring to FIG. 2, the control unit 160 may include a call rejection setting unit 161, a call rejection executing unit 163, a call rejection message processing unit 165, and a call rejection log managing unit 167.

The call rejection setting unit 161 may be configured for setting a call rejection function. For this, the call rejection setting unit 161 may offer a call rejection setting screen and also offer a menu item or icon item to call such a screen. Additionally or alternatively, the call rejection setting unit 161 may automatically offer a screen containing a call rejection setting item in response to the arrival of an incoming call. Particularly, the call rejection setting unit 161 may offer items for activating or inactivating a call rejection function within or after a time interval. Also, the call rejection setting unit 161 may offer items for activating or inactivating a call rejection function within or after a distance from a current location or at a targeted location. Also, the call rejection setting unit 161 may offer items for activating or inactivating a call rejection function at a location for an amount of time.

The call rejection executing unit 163 may be configured to not only store the setting condition information 153 corresponding to a selected item in the memory unit 150 when one of call rejection setting items offered by the call rejection setting unit 161 is selected in response to an input event, but also perform a call rejection function based on the setting condition information 153. Particularly, when a time item is selected, the call rejection executing unit 163 may perform a call rejection function for an amount of time from the time point of selection. Also, when a current location item is selected, the call rejection executing unit 163 may perform a call rejection function until the device strays from a current location or until an input event for inactivating a call rejection function is received. Meanwhile, when an incoming call arrives during the activation of a call rejection function, the call rejection executing unit 163 may offer information about an incoming call to both the call rejection message processing unit 165 and the call rejection log managing unit 167.

The call rejection message processing unit 165 may be configured to offer a call rejection message when an incoming call arrives during the activation of a call rejection function. Particularly, while a call rejection function is activated, the call rejection message processing unit 165 may check whether there is the schedule information 155 corresponding to at least one of a relevant time and location. If so, the call rejection message processing unit 165 may parse title, time, location and content from the schedule information 155 and create a call rejection message using such parsed information. Then the call rejection message processing unit 165 may offer a call rejection message to a caller device. If there is no corresponding schedule information, the call rejection message processing unit 165 may transmit a default call rejection message to a caller device or output a screen for creating a call rejection message. If there are two or more default call rejection messages, the call rejection message processing unit 165 may output a window for selecting one of such default messages.

The call rejection log managing unit 167 may be configured to manage a log about received incoming calls and transmitted call rejection messages while a call rejection function is activated. When a call rejection function is inactivated, the call rejection log managing unit 167 may output such a log, together with such messages, to the display unit 140.

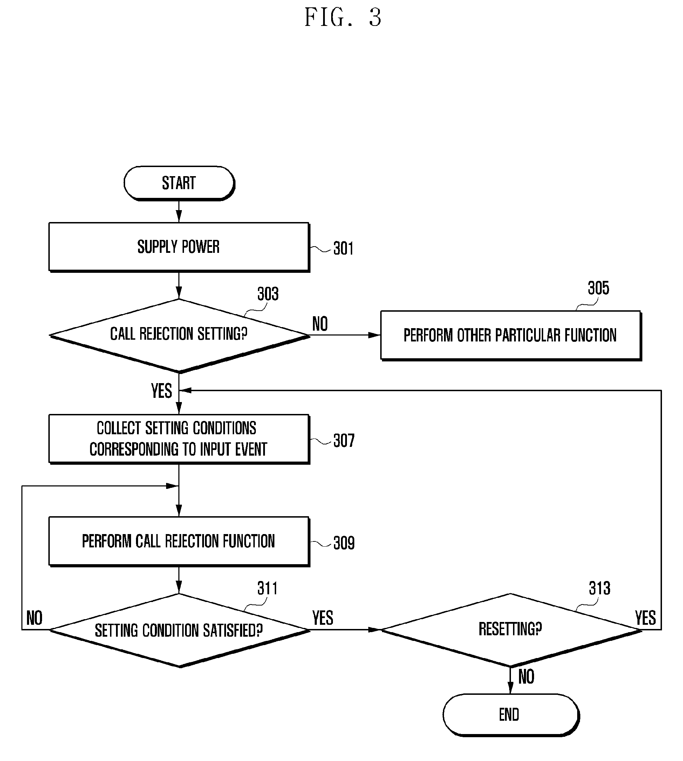

FIG. 3 is a flow diagram illustrating a method for providing a call rejection function according to an embodiment of the present disclosure.

Referring to FIG. 3, at operation 301, the control unit 160 of the device 100 may supply electric power to respective elements of the device 100. Particularly, even in an idle mode, the control unit 160 may supply electric power to the communication unit 110 to support a call rejection function. At operation 303, the control unit 160 may determine whether there is an input event for setting a call rejection function. For this, the control unit 160 may offer a menu item or icon for setting a call rejection function. Alternatively, the control unit 160 may output a default screen for setting a call rejection function in response to the arrival of an incoming call. If there is no input event for setting a call rejection function, the control unit 160 may perform a particular function of the device 100 at operation 305, such as a call function, a file play function, a broadcast reception function, or any other similar and/or suitable function, at a user's request.

If a call rejection item is selected in response to an input event for setting a call rejection function at operation 303, the control unit 160 may collect the setting condition information 153 corresponding to the input event at operation 307. Then the control unit 160 may perform a call rejection function at operation 309. Thereafter, at operation 311, the control unit 160 may determine whether a setting condition is satisfied. Specifically, the control unit 160 may check whether a selected time elapses, whether the device strays from a selected location, or whether the device enters a selected location. If a setting condition is not satisfied, the control unit 160 may return to operation 309.

Meanwhile, if a setting condition is satisfied at operation 311, the control unit 160 may determine whether there is an input event for resetting a call rejection function at operation 313. If there is no input event for resetting a call rejection function, the control unit 160 may inactivate a call rejection function. If any resetting input event happens, the control unit 160 may return to operation 307. In some various embodiments, when a call rejection function is inactivated, the control unit 160 may output a menu screen that contains call rejection setting items. Alternatively, the control unit 160 may output a menu item or icon for a call rejection function.

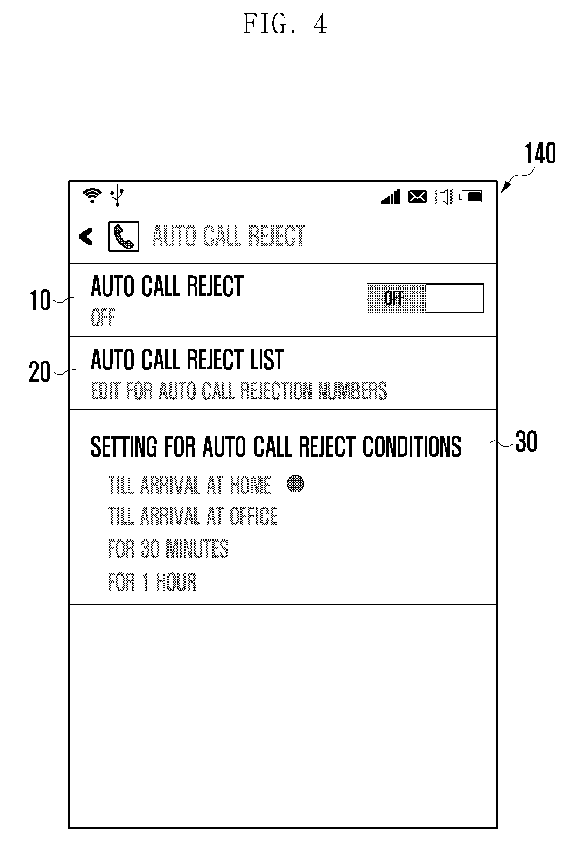

FIG. 4 shows a screenshot illustrating a screen interface for setting a call rejection function according to an embodiment of the present disclosure.

Referring to FIG. 4, the device 100 may display on the display unit 140 a call rejection setting screen that contains an automatic call rejection item 10, an automatic call rejection list 20, and setting items 30. For this, the device 100 may offer a menu item or icon for calling the call rejection setting screen and display this screen in response to a selection of such a menu item or icon. Alternatively or additionally, the device 100 may display this screen as a default screen for a given time when an incoming call arrives. Also, the device 100 may display this screen again when any setting condition of a previous call rejection function is satisfied. After a given time passes from a display of such a call rejection setting screen, the device 100 may display any other predefined screen such as a call reception screen or a previously running screen.

The automatic call rejection item 10 allows a user to determine whether to apply a call rejection function. The automatic call rejection item 10 may indicate whether a call rejection function is currently activated (i.e., turned on) or not (i.e., turned off), and also offer a region for selecting the activation or inactivation of a call rejection function. The automatic call rejection item 10 may be automatically assigned to an activated status of a call rejection function when the device enters into a call rejection setting screen in response to a selection of a menu item or icon. In contrast, when a setting condition for a call rejection function is satisfied, the automatic call rejection item 10 may be assigned to an inactivated status of a call rejection function. This assignment may be varied according to a designer's intention or user's setting.

The automatic call rejection list 20 indicates a list of call rejection devices and allows a user to edit such a list. The automatic call rejection list 20 may be set such that all incoming calls will be rejected. Alternatively, the automatic call rejection list 20 may be set such that selected devices among all devices registered in a phonebook or other devices except selected devices will be rejected. Alternatively, the automatic call rejection list 20 may be set such that a selected device group in a phonebook or other device groups except selected device groups will be rejected. For the above, the device 100 may offer a screen for selecting device items from a phonebook when the automatic call rejection list 20 is selected. Further, the device 100 may offer an item for selecting any device not registered in a phonebook.

The setting items 30 allow a user to select one of various setting conditions. As shown, the setting items 30 may include location items such as "till arrival at home" and "till arrival at office" and/or time items such as "for 30 minutes" and "for 1 hour". Although not shown, the setting items 30 may further include distance items such as "within 10 miles" and "within 100 miles". Namely, the setting items 30 may include at least one of time, distance and location. The starting point of the setting items 30 may be at least one of a current time and a current location. Setting conditions may be an elapse of time from a current time, a distance from a current location to a specific location, a movement from a current location to a specific location, and any other similar and/or suitable condition. Such setting conditions may have a combination form of time and location.

The above-discussed setting screen may be displayed on the display unit 140 at a user's request or in response to an event such as the arrival of an incoming call, the disconnection of a current call, or a user's call rejection action. For this call rejection action, the device 100 may display a menu item or icon for allowing a user to take a call rejection action.

Additionally, the above setting screen may be removed from the display unit 140 when an input event for completing a setting process is received or when a given time elapses.

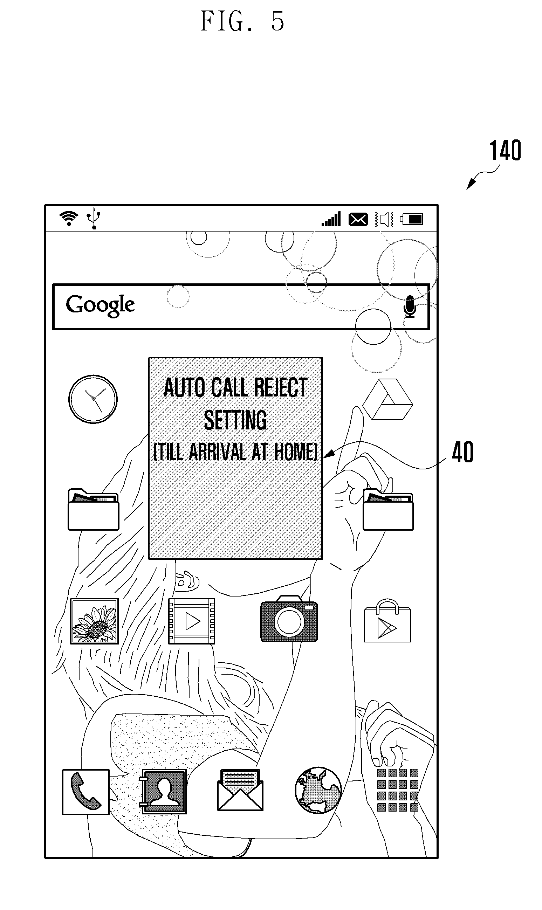

FIG. 5 shows a screenshot illustrating a screen after a call rejection function is set according to an embodiment of the present disclosure.

Referring to FIG. 5, in a case where a call rejection function is set and performed, the display unit 140 of the device 100 may display call rejection information 40 that indicates a call rejection status. The call rejection information 40 may be offered on the topmost layer of a screen. Namely, the call rejection information 40 may be displayed in an overlay form on an idle screen or any other screen. The call rejection information 40 may be continuously displayed on the display unit 140 until a current setting condition is satisfied or until a user takes a confirming action such as pressing an OK icon. Alternatively, the call rejection information 40 may be displayed on the display unit 140 for a given time and then removed from the display unit 140 in response to an elapse of that time. The call rejection information 40 may be displayed again on the display unit 140 when an incoming call arrives from a caller device.

As shown, the call rejection information 40 may include certain words indicating a call rejection status and other words indicating a current setting condition such as "till arrival at home". Although not shown, the call rejection information 40 may further include an OK icon to be used for removing the call rejection information 40 from the display unit 140 as discussed above. Also, the call rejection information 40 may still further include an END icon to be used for directly terminating a call rejection function without entering a menu screen.

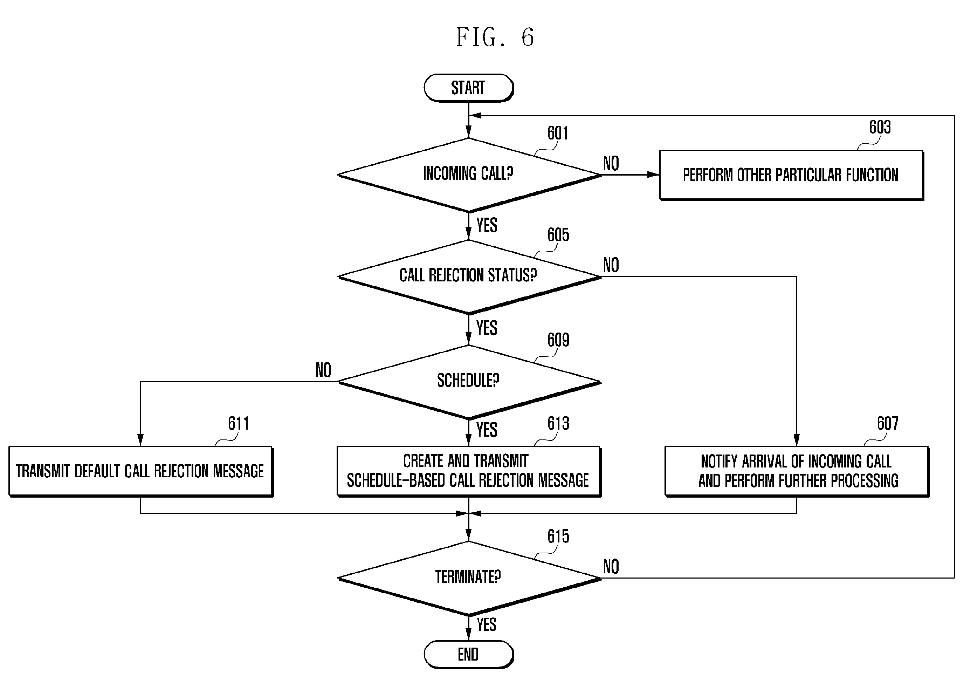

FIG. 6 is a flow diagram illustrating a method for providing a call rejection message according to an embodiment of the present disclosure.

Referring to FIG. 6, at operation 601, the control unit 160 of the device 100 may determine whether a current event is the arrival of an incoming call. If a current event is not the arrival of an incoming call, the control unit 160 may perform at operation 603 any other selected function, such as a file play function, a broadcast reception function, or a note or memo function, in response to that event.

If a current event is the arrival of an incoming call, the control unit 160 may determine at operation 605 whether the device 100 is in a call rejection status. If the device 100 is not in a call rejection status, the control unit 160 may notify the arrival of an incoming call and perform a further processing in response to a user's input at operation 607.

For example, the control unit 160 may output a predefined ringtone, sound effect, or vibration to notify the arrival of an incoming call. If an input event for connecting an incoming call happens, the control unit 160 may perform a processing for connecting an incoming call with a caller device. Together with notifying the arrival of an incoming call, the control unit 160 may display a call rejection setting screen on the display unit 140. Although not shown in FIG. 6, if a call rejection function is activated through this screen, the control unit 160 may go to operation 609.

If it is determined at operation 605 that the device 100 is in a call rejection status, the control unit 160 may determine whether there is any schedule associated with a current situation such as a current time or a current location at operation 609. Namely, the control unit 160 may check whether the schedule information 155 associated with a current time or location is stored in the memory unit 150. If there is no schedule associated with a current time or location, the control unit 160 may offer a default (i.e., created and stored in advance) call rejection message and a user interface for entering any arbitrary words at operation 611. Alternatively, the control unit 160 may offer a list of two or more default call rejection messages.

If there is any schedule associated with a current time or location at operation 609, the control unit 160 may create and transmit a call rejection message based on the schedule information 155 at operation 613. Specifically, the control unit 160 may parse a title, a schedule time, a location appointed for performing a schedule, and schedule content from the schedule information 155 and create a call rejection message using such parsed information. Further, the control unit 160 may obtain a phone number of a caller device from an incoming call and then support the transmission of the call rejection message to the caller device.

Thereafter, the control unit 160 may check at operation 615 whether an input for terminating a process happens. If there no terminating event, the control unit 160 may return to operation 601. Otherwise the control unit 160 may end the process.

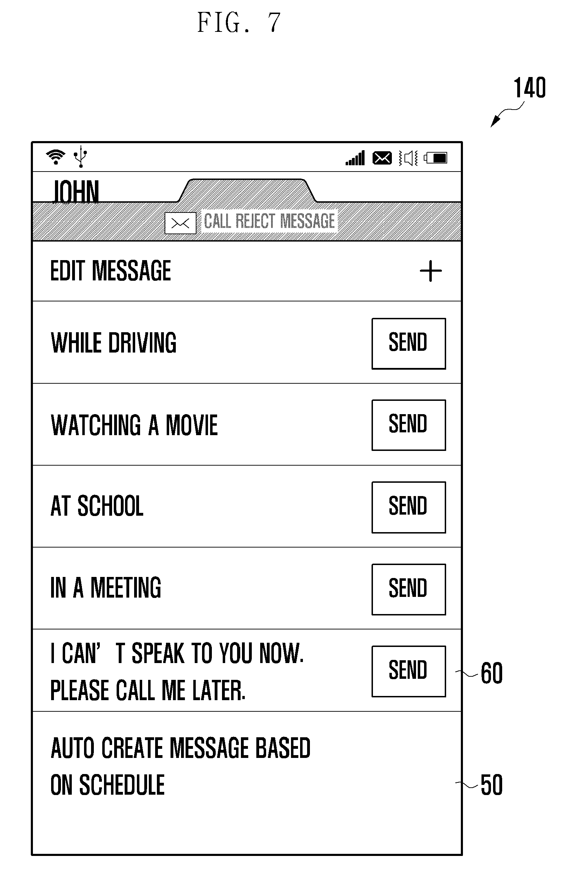

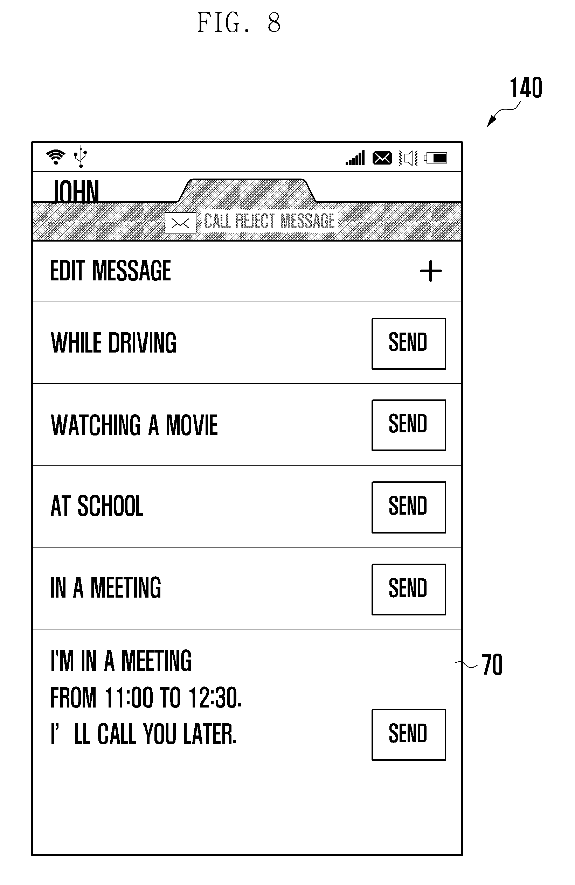

Although not shown in FIG. 6, if the device 100 enters a call rejection status in response to a user's selection even though it is determined at operation 605 that the device 100 is not in a call rejection status, the control unit 160 may proceed to operations 609 and 613. If there is no schedule at operation 609, the control unit 160 may offer a default call rejection message and a user interface for entering any arbitrary words as will be described below with reference to FIGS. 7 and 8.

As discussed before, in case a call rejection function is performed, the device 100 may offer a call rejection message in various manners depending on whether there is the schedule information 155.

FIGS. 7 and 8 show screenshots illustrating examples of a call rejection message according to various embodiments of the present disclosure.

Referring to FIG. 7, when an incoming call arrives in a call rejection status, the device 100 may display on the display unit 140 a variety of default call rejection messages such as "while driving", "watching a movie", "at school", "in a meeting", and any other similar and/or suitable message. Further, the control unit 160 may offer a predefined call rejection notification item 60 as a default call rejection message.

A user may select one of call rejection messages and send the selected message to a caller device. At this time, the device 100 may display information about an incoming call on the display unit 140. Further, the control unit 160 may output a menu item for selecting a default call rejection message to the display unit 140 and, in response to a selection, output a screen to the display unit 140 as shown in FIG. 7. Therefore, a user can know which caller device sends an incoming call, and then select a default call rejection message.

Particularly, the device 100 may offer a schedule reference item 50 that allows a user to create a message by referring to the schedule information 155. If the schedule reference item 50 is selected, the control unit 160 may output, together with default messages, a schedule-based and automatically created call rejection message 70 as shown in FIG. 8. Therefore, a user can check the content of the schedule-based call rejection message 70 and then select it for transmission to a caller device. The device 100 may offer a function and/or a window to edit the content of the schedule-based call rejection message 70 such that a user can selectively add or delete the content of the schedule-based call rejection message 70.

Meanwhile, the device 100 may offer a setting function to automatically transmit the schedule-based call rejection message 70. If the schedule-based call rejection message 70 is set to be automatically transmitted, the device 100 may create a call rejection message by referring to the schedule information 155 associated with a current time or location and then transmit it to a caller device. Therefore, if a call rejection function is activated and if there is any schedule information, the device 100 may parse information associated with various schedules and offer related call rejection messages. In other words, the device 100 may allow creation and transmission of various call rejection messages depending on schedule information, and a user of caller device can easily know a situation which a user of the device 100 is in.

If there is no schedule information 155, the device 100 may display a list of default call rejection messages except the schedule reference item 50. If there is no selection of default call rejection messages for a given time, the device 100 may transmit the predefined call rejection notification 60 to a caller device.

As fully discussed hereinbefore, the method and electronic device according to various embodiments of this disclosure may promptly perform a setting process of a call rejection function in response to user's intuitive manipulations. Further, the method and electronic device may provide a call rejection message in various forms and manners depending on a user's selection or schedule information.

According to the trend of digital convergence, the above-discussed device 100 may essentially or selectively further include any other elements such as a short-range communication module, a wired or wireless communication interface, an Internet communication module, a digital broadcast receiving module, and any other similar and/or suitable module. Meanwhile, as will be understood by those skilled in the art, some of the above-mentioned elements in the device 100 may be omitted or replaced with another.

Additionally, the mobile device according to various embodiments disclosed herein may be applied to various types of mobile communication terminals such as a cellular phone, a smart phone, a tablet Personal Computer (PC), a handheld PC, a Portable Multimedia Player (PMP), a Personal Digital Assistant (PDA), a notebook, a portable game console, and any other similar and/or suitable terminal.

It will be appreciated that various embodiments of the present disclosure according to the claims and description in the specification can be realized in the form of hardware, software or a combination of hardware and software.

Any such software may be stored in the form of volatile or nonvolatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disc (CD), Digital Versatile Disc (DVD), magnetic disk or magnetic tape or the like. It will be appreciated that the storage devices and storage media are various embodiments of non-transitory machine-readable storage that are suitable for storing a program or programs comprising instructions that, when executed by a least one processor in an electronic device, implement various embodiments of the present disclosure. Accordingly, various embodiments provide a program comprising code for implementing an apparatus or a method as claimed in any one of the claims of this disclosure and a non-transitory machine-readable storage storing such a program.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for providing a call rejection function, the method comprising:
receiving an event for setting the call rejection function;
outputting one or more conditions for setting the call rejection function in response to the event;
receiving an input event for choosing a condition for setting the call rejection function; and
performing the call rejection function based on the chosen condition.

2. The method of claim 1, wherein the receiving of the event includes one of:
receiving an incoming call from a caller device;
receiving a call rejection action regarding an incoming call;
disconnecting a current call; and
receiving a selection event for selecting a menu or icon for setting the call rejection function.

3. The method of claim 1, wherein the conditions include at least one of a time, a distance, and a location.

4. The method of claim 1, wherein the outputting one or more conditions include at least one of:
outputting a condition for performing the call rejection function for an amount of time from a current time;
outputting a condition for performing, activating or inactivating the call rejection function within a distance from a current location; and
outputting a condition for activating or inactivating the call rejection function at a location.

5. The method of claim 1, further comprising:
displaying, on a display unit, an information of the chosen condition for the call rejection function.

6. The method of claim 5, wherein the displaying of the information of the chosen condition includes at least one of:
displaying an information containing at least one of an initial setting value, an elapse value, and a residual value;
displaying an OK item for removing the information of the chosen condition from the display unit; and
displaying an END item for inactivating the call rejection function.

7. The method of claim 1, wherein the performing of the call rejection function includes at least one of:
when an incoming call arrives, determining whether there is schedule information corresponding to a current situation, and transmitting a default call rejection message to a caller device if there is no corresponding schedule information;
when an incoming call arrives, determining whether there is schedule information corresponding to a current situation, outputting a screen for selecting one of default call rejection messages if there is no corresponding schedule information, and transmitting a selected default call rejection message to a caller device; and
when an incoming call arrives and if there is schedule information corresponding to a current situation, automatically creating a call rejection message by parsing the schedule information, and transmitting the created call rejection message to a caller device.

8. The method of claim 1, wherein the performing of the call rejection function includes at least one of:
when an incoming call arrives, storing a log about the incoming call;
when an incoming call arrives, transmitting and storing a call rejection message; and
when the call rejection function is inactivated, outputting at least one of the log and the call rejection message.

9. An electronic device for providing a call rejection function, the device comprising:
a display unit configured to output one or more conditions for setting the call rejection function when an event is received; and
a control unit configured to perform the call rejection function based on a chosen condition when an input event for choosing the condition is received.

10. The device of claim 9, wherein the display unit is further configured to output the condition when an incoming call is received from a caller device, when a call rejection action regarding an incoming call is received, when a current call is disconnected, or when a selection event for selecting a menu or icon for setting the call rejection function is received.

11. The device of claim 9, wherein the display unit is further configured to output the conditions including at least one of a time , a distance , and a location.

12. The device of claim 11, wherein the display unit is further configured to output at least one of a condition for performing the call rejection function for an amount of time from a current time, a condition for performing, activating or inactivating the call rejection function within a distance from a current location, and a condition for activating or inactivating the call rejection function at a location.

13. The device of claim 9, wherein the display unit is further configured to display an information of the chosen condition for the call rejection function.

14. The device of claim 9, wherein the control unit is further configured to, when an incoming call arrives, determine whether there is schedule information corresponding to a current situation, and to transmit a default call rejection message to a caller device if there is no corresponding schedule information,
wherein the control unit is further configured to, when an incoming call arrives, determine whether there is schedule information corresponding to a current situation, to output a screen for selecting one of default call rejection messages if there is no corresponding schedule information, and to transmit a selected default call rejection message to a caller device, or
wherein the control unit is further configured to, when an incoming call arrives and if there is schedule information corresponding to a current situation, automatically create a call rejection message by parsing the schedule information, and to transmit the created call rejection message to a caller device.

15. The device of claim 9, further comprising:
a memory unit configured to store a log about an incoming call and a call rejection message transmitted in response to the incoming call,
wherein the control unit is further configured to output at least one of the log and the call rejection message when the call rejection function is inactivated.
